# EUROPEAN PATENT SPECIFICATION

(11) **EP 3 762 949 B1**
(45) Date of publication and mention of the grant of the patent: **10.12.2025**
(21) Application number: 19763603.8
(22) Date of filing: 05.03.2019
(51) Int. Cl.: H01B 9/00, H01B 5/10, H01B 7/18, H01B 13/02

(54) **OVERHEAD ELECTRICAL CABLES AND METHOD FOR FABRICATING SAME**
ELEKTRISCHE FREILEITUNGSKABEL UND HERSTELLUNGSVERFAHREN
CÂBLES ÉLECTRIQUES AÉRIENS ET LEUR PROCÉDÉ DE FABRICATION

(30) Priority: 05.03.2018 US 201862638436 P
(43) Date of publication of application: 13.01.2021
(73) Proprietor: CTC Global Corporation, Irvine, CA 92614 (US)
(72) Inventor: BOSZE, Eric J., Irvine, California 92614 (US); WEBB, William, Laguna Niguel, California 92677 (US); PILLING, Douglas A., Irvine, California 92614 (US); WONG, Christopher, Irvine, California 92614 (US)
(74) Representative: D Young & Co LLP
(86) International application number: PCT/US2019/020855
(87) International publication number: WO 2019/173414

(56) References cited:
- CN-A- 103 854 807
- JP-A- S6 310 407
- KR-A- 20110 091 322
- KR-B1- 101 785 890
- US-A- 3 261 908
- US-A1- 2012 170 900
- US-A1- 2012 170 900
- US-A1- 2014 251 653
- US-B1- 6 180 232
- US-B1- 6 180 232
- US-B2- 9 847 152

## Description

### FIELD

This disclosure relates to the field of overhead electrical cables for the transmission and distribution of electricity.

### BACKGROUND

Overhead electrical cables for the transmission and distribution of electricity typically include a bare aluminum electrical conductor having sufficient diameter (e.g., cross-sectional area) to safely transmit electricity at high voltages. Although aluminum has a high ratio of conductivity to mass, some aluminum alloys are too weak to be selfsupporting when strung between support structures (e.g., between towers), leading to large sags, and a central strength member must be used to support the aluminum conductor. In a typical configuration, individual metal (e.g., aluminum) conductive strands are helically wound around and supported by the central strength member. When installed, the strength member bears the majority of the mechanical (e.g., tensile) load and is installed under high tensile loading. Traditionally, the strength member is comprised of a plurality of steel strands that are twisted together, a cable configuration referred to as aluminum conductor steel reinforced (ACSR). Recently, other materials have been utilized for the strength member, such as advanced fiber-reinforced composite materials having high tensile strength, low coefficient of thermal expansion (CTE) and other desirable thermal and mechanical properties.

One example of an overhead electrical cable having such a composite strength member is the ACCC^{®} overhead electrical cable available from CTC Global Corporation of Irvine, CA, USA. See, for example, U.S. Patent No. Pat. No. 7,368,162 by Hiel et al, which is incorporated herein by reference in its entirety. The use of such composite strength members advantageously enables the use of high conductivity, fully annealed aluminum for the outer conductive strands. The modulus of elasticity of the carbon fibers used in the ACCC^{®} composite strength member is higher than the modulus of steel (about 235 GPa for carbon fiber vs. about 200 GPa for steel). In the ACCC^{®} strength member, however, an outer layer of glass fibers (elastic modulus of about 45.6 GPa) that surrounds the carbon results in a combined modulus of the ACCC^{®} composite strength member of about GPa, lower than steel. This outer layer of glass fibers is used to improve impact resistance and increase conductor flexibility, and also serves to insulate the carbon fibers from the aluminum strands to prevent galvanic corrosion.

A number of design criteria go into the configuration of an overhead electrical cable, and the design criteria often depend upon the local climate at the location where the electrical cable is deployed. For example, when the electrical cable is installed in cold climate areas where snow and ice events are common, ice may accumulate on the surface of the outer conductor under low-load or line-off conditions, when little or no current is flowing through a bare overhead electrical cable, due to a lack of heat that is normally present under regular operating conditions. Electrical utilities in very heavy ice areas use an ice thickness of as much as 2 inches (50 mm) to calculate iced conductor weight. The added weight of ice accumulation will increase tension on the cable and may cause a significant increase in cable sag, i.e., an increase in the vertical distance between the support points and the lowest point of the cable. High voltage bare overhead electrical cables often traverse roadways, trees and/or lower voltage overhead electrical distribution cables. If these high voltage transmission cables become loaded with ice and sag too close to these objects, they become very dangerous and can lead to failures and the resulting power outages.

At the same time, the overhead electrical cables must also be able to safely transmit increased electrical loads (e.g., increased voltage) during the warmer summer months when electrical demands are at their highest. Such increased loads can raise the temperature of the cable (due to resistance heating), causing the cable to thermally expand (lengthen) and sag toward the ground, creating the same problems that may be experienced due to ice loading.

One solution to these problems is to utilize higher towers to support the cables. However, this solution comes with an increased cost. Another solution to the ice loading problem is to utilize a strength member having a very high tensile strength, such as a strength member of a fiber-reinforced composite, and to install the cable between support structures at a very high tension.

US 2012/0170900 A1 describes an aluminum alloy conductor composite reinforced for high voltage overhead power lines.

KR 101785890 B1 describes an internal strength member for an overhead transmission line and an overhead transmission line comprising the same.

US 2014/0251653 A1 describes an electric conductor that may comprise a conductor core and a plurality of conductor strands wrapped around the conductor core.

KR 20110091322 A describes an overhead power transmission cable comprising: a steel core made of at least one steel wire; an inner conductor in which a plurality of aluminum wires are stranded while surrounding the steel core; and an outer conductor in which a plurality of aluminum alloy wires surround the inner conductor and are twisted and arranged at the outermost part.

JP S6310407 A discloses an overhead power transmission line comprising strands of three or more different materials, in which the strands are arranged and stranded in order from the center to the outer side in order of hardness.

### SUMMARY

The invention is set out in the appended set of claims. Heavy ice loading can cause permanent elongation of an overhead electrical cable. As a result of an increase in cable tension due to the added weight of ice, the cable may be stretched beyond its initial yield point, which can prevent it from returning to its initial sag or tension condition after the ice is abated. The improved elasticity of fiber-reinforced composite strength member, such as the ACCC^{®} strength member, allows the cable to return to its initial sag and tension condition after the ice load has dissipated.

There is a need for an overhead electrical cable having a composite strength member that is capable of use under both heavy ice loading conditions and under conditions of very high current, while providing the other benefits associated with the use of the composite strength member.

According to the invention, such an overhead electrical cable is disclosed according to appended claim 1

The foregoing overhead electrical cable may be characterized as having feature refinements and/or additional features, which may be implemented alone or in any combination. In one characterization, not recited by the claims, the different material property between the first and second aluminum materials is selected from the group of properties consisting of yield stress, elastic modulus, hardness, electrical conductivity and tensile strength. In one particular characterization, not recited by claims, one different material property is yield stress. In one refinement, the second aluminum material has a yield stress that is greater than the yield stress of the first aluminum material. In another particular characterization, not recited by claims, the different material property between the first and second aluminum materials is tensile strength. In one refinement, the second aluminum material has a tensile strength that is less than the tensile strength of the first aluminum material. In yet another characterization, not recited by claims, the different material property between the first and second aluminum materials is electrical conductivity. In one refinement, the second aluminum material has an electrical conductivity that is greater than the electrical conductivity of the first aluminum material.

In another characterization, not recited by claims, at least one of the first and the second aluminum materials has an electrical conductivity of at least about 60% IACS (International Annealed Copper Standard). In a further refinement, at least one of the first and the second aluminum materials has a conductivity of at least about 62% IACS. In yet a further refinement, the second aluminum material has an electrical conductivity of at least about 62% IACS. In another characterization, not recited by claims, the second aluminum material is a 1350-0 annealed aluminum alloy. In yet another characterization, not recited by claims, the first aluminum material is a hardened aluminum alloy. In another characterization, not recited by claims, the first aluminum material is selected from an aluminum-zirconium (AlZr) aluminum alloy and a 1350-H19 aluminum alloy.

In a comparative example to the invention, the conductive strands may have a variety of cross-sections, including circular, oval and polygonal. In one comparative example, at least one of the first aluminum material strands and the second aluminum material strands are trapezoidal strands. According to the invention, both of the first aluminum material strands and the second aluminum material strands are trapezoidal strands. The overhead electrical cable may comprise more than two layers of conductive strands. In one characterization, the overhead electrical cable comprises a third conductive layer disposed between the first conductive layer and the second conductive layer. In one refinement, not recited by claims, the third conductive layer includes conductive strands of a third aluminum material that is different than the first aluminum material and different than the second aluminum material. In another refinement, not recited by claims, the third conductive layer comprises strands of the first aluminum material. In yet another refinement, not recited by claims, the third conductive layer comprises strands of the second aluminum material. In yet another characterization, not recited by claims, the overhead electrical cable comprises at least a fourth conductive layer disposed between the third conductive layer and the second conductive layer.

According to the invention, the strength member comprises a fiber-reinforced composite strength element. In one refinement, the fiber-reinforced composite strength element comprises substantially continuous reinforcing carbon fibers disposed in a binding matrix. In another refinement, not recited by claims, the strength member has a diameter of not greater than about 30 mm. In a further refinement, not recited by claims, the strength member has a diameter of at least about 3 mm. In another characterization, not recited by the claims, the strength member has an ultimate tensile strength (UTS) of at least about 1700 MPa.

In another example, a method, not recited by claims, for the manufacture of an overhead electrical cable is disclosed. The method includes the steps of wrapping a plurality of first strands of a first aluminum material onto a strength member to form a first conductive layer, and wrapping a plurality of second strands of a second aluminum material around the first conductive layer to form a second conductive layer. The second aluminum material has at least one material property having a value that is different than a value of the same material property of the first aluminum material.

The foregoing method may be characterized as having refinements and/or additional steps, which may be implemented alone or in any combination. In one characterization, the plurality of first strands of the first aluminum material have a trapezoidal cross-section. In one refinement, the plurality of second strands of the second aluminum material have a trapezoidal cross-section.

In another characterization, the method comprises wrapping a plurality of third strands of a third aluminum material around the first conductive layer before the wrapping of the second conductive strands around the first conductive layer. In a further refinement, the method includes the step of wrapping a plurality of fourth strands of a fourth aluminum material around the first conductive layer before the wrapping of the third conductive strands around the first conductive layer.

In another example, a method for the installation of an electrical transmission line is disclosed. The method includes the steps of stringing an overhead electrical cable between at least two support structures and applying tension to the overhead electrical cable. While the overhead electrical cable is under the applied tension, first and second ends of the overhead electrical cable are clipped such that the overhead electrical cable is at least partially supported by the two support structures and is strung at a clipped-in tension. The overhead electrical cable comprises, a strength member, a first conductive layer surrounding the strength member, the first conductive layer comprising strands of a first aluminum material, and a second conductive layer surrounding the first conductive layer, the second conductive layer comprising conductive strands of a second aluminum material that is different than the first aluminum material, wherein the second aluminum material has at least one material property that is different that the same material property of the first aluminum material.

### DESCRIPTION OF THE DRAWINGS

**FIG. 1** illustrates a schematic view of an overhead electrical cable according to an example of the present disclosure, not covered by claims.
**FIG. 2** illustrates a schematic view of an overhead electrical cable according to an embodiment of the present disclosure according to the invention.
**FIG. 3** illustrates a schematic view of an overhead electrical cable according to the invention.
**FIG. 4** illustrates a schematic view of an overhead electrical cable according to the invention.

### DESCRIPTION OF THE EMBODIMENTS

In one embodiment, a bare overhead electrical cable is disclosed according to appended claim 1.

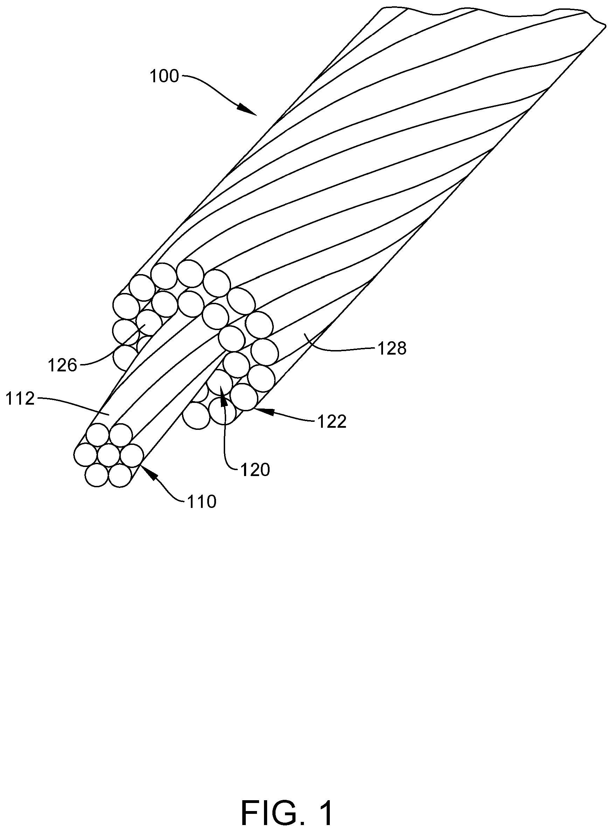

**FIG. 1** illustrates a schematic cross-section of an overhead electrical cable **100** according to an example of the present disclosure, not covered by claims. As illustrated in **FIG. 1****,** the strength member **110** includes seven individual strength elements **112** (e.g., rods) that are combined (e.g., helically wrapped) to form the strength member **110.** In a comparative example to the invention, the strength elements **112** may be fabricated from steel, in which case the electrical cable **100** would be referred to as an ACSR (aluminum conductor steel reinforced) conductor. According to the invention, the strength elements **112** are fabricated from a composite material including structural (e.g., reinforcing) fibers, which may be disposed in a binding matrix i.e., where the matrix binds the structural fibers together to form the composite material. Examples of such composite materials are discussed in detail below.

The first conductive strands **126** and the second conductive strands **128** are fabricated from an electrically conductive material, particularly a metal such as copper or aluminum. For bare overhead electrical cables, aluminum is generally preferred due to its good conductivity and low density (e.g., light weight). As is discussed in more detail below, according to one example, the first conductive layer **120** includes strands **126** of a first aluminum material, and the second conductive layer **122** includes strands **128** of a second aluminum material, where the second aluminum material has at least one material property that is different than (e.g., has a different value than) the same material property of the first aluminum material.

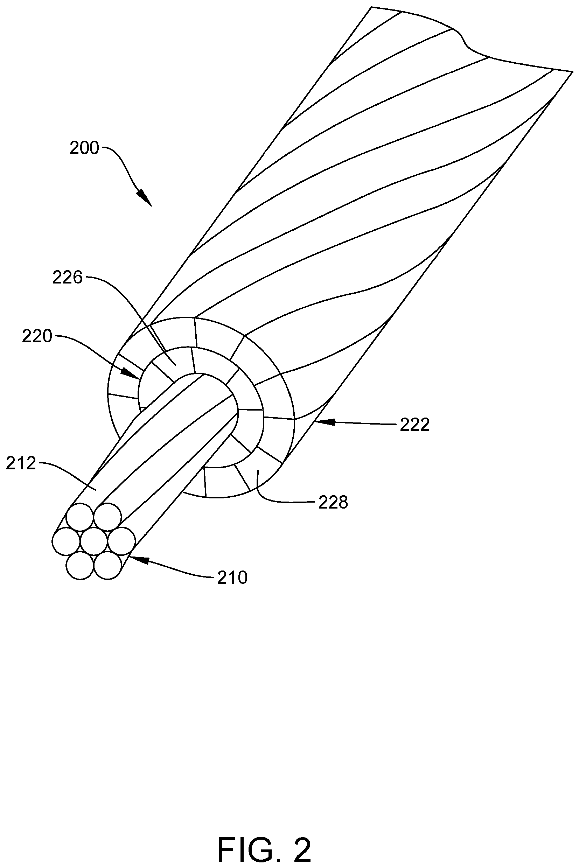

**FIG. 2** schematically illustrates another configuration for an overhead electrical cable **200** according to the invention. As illustrated in **FIG. 2****,** the strength member **210** also includes seven individual strength elements **212** that are combined (e.g., helically wrapped) to form the strength member **210,** in a manner similar to the example of **FIG. 1****.** The strength elements **212** may be fabricated from, for example, steel or a reinforced composite, as is discussed with respect to **FIG. 1****.** The first conductive strands **226** and the second conductive strands **228** are also fabricated from an electrically conductive material, as is discussed with respect to **FIG. 1****.** As is discussed in more detail below, according to one embodiment, the first conductive layer **220** includes strands **226** of a first aluminum material, and the second conductive layer **222** includes strands **228** of a second aluminum material that has at least one material property that is different than the same material property of the first aluminum material. The embodiment illustrated in **FIG. 2** differs from the example in **FIG. 1** in that the conductive strands **226/228** have a polygonal (e.g., trapezoidal) cross-section. The use of such a polygonal cross-section enables a higher density conductive layer **220/222** to be formed. That is, there are substantially no air gaps between adjacent conductive strands either in the same conductive layer or between the conductive layers. This enables the outer diameter of the overhead electrical cable **200** to be reduced (e.g., to be smaller) than if round conductive strands are used **(****FIG. 1****)** for the same effective amount of aluminum. The smaller outer diameter may reduce the amount of ice weight on the overhead cable during an ice loading event. That is, the same thickness of ice on an overhead cable that is 0.8 inches in diameter vs a cable that is 1 inch in diameter will produce less ice weight, and less tension, on the overhead cable.

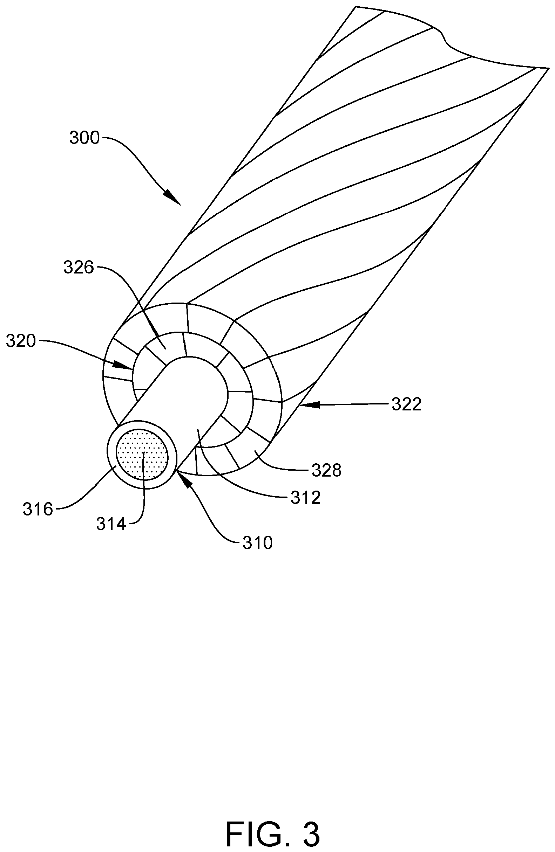

**FIG. 3** schematically illustrates a configuration for an overhead electrical cable **300** according to the invention. As illustrated in **FIG. 3****,** the first conductive strands **326** of the first conductive layer **320** and the second conductive strands **328** of the second conductive layer **322** are also fabricated from an electrically conductive material, as is discussed with respect to **FIG. 1****,** particularly aluminum. The strands 326/328 have a trapezoidal cross-section as is discussed with respect to **FIG. 2****.** Similarly, the first conductive layer **320** includes strands **326** of a first aluminum material, and the second conductive layer **322** includes strands **328** of a second aluminum material.

As illustrated in **FIG. 3****,** the strength member **310** includes a single strength element **312.** The single strength element **312** is fabricated from a reinforced composite material, as is discussed with respect to **FIG. 1****.** The embodiment illustrated in **FIG. 3** particularly includes a single strength element **312** having an inner core **314** and an outer layer **316** surrounding the inner core **314.** Such a strength element may include, for example, an inner core including high strength carbon fibers and an outer layer comprising glass fibers, a configuration referred to as ACCC^{®} and available from CTC Global Corp., Irvine, CA, USA. See U.S. Patent No. 7,368,162 by Hiel et al., noted above.

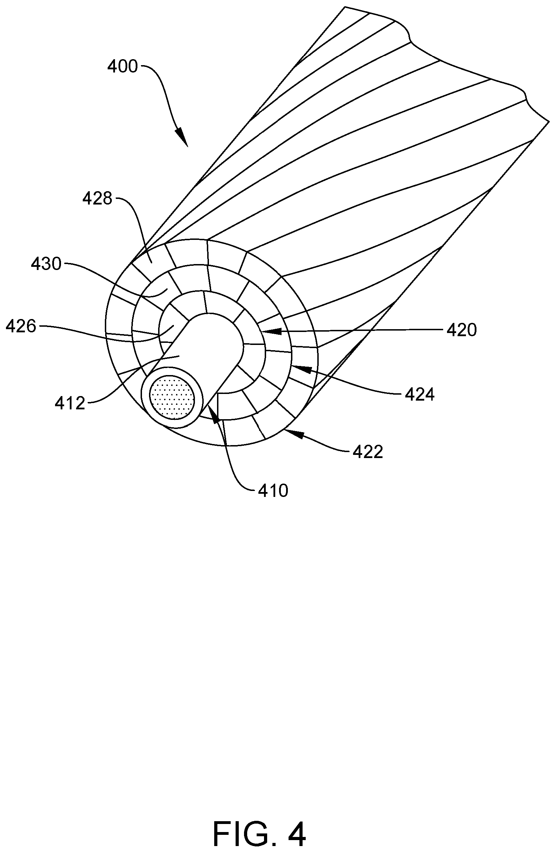

**FIG. 4** schematically illustrates yet another configuration for an overhead electrical cable **400,** according to the invention. As illustrated in **FIG. 4****,** the first conductive strands **426** of the first conductive layer **420** and the second conductive strands **428** of the second conductive layer **422** are also fabricated from an electrically conductive material, as is discussed with respect to **FIG. 1****,** particularly aluminum, and have a trapezoidal cross-section as is discussed with respect to **FIG. 2****.** Similarly, the first conductive layer **420** includes strands **426** of a first aluminum material, and the second conductive layer **422** includes strands **428** of a second aluminum material that is different than the first aluminum material. The strength member **410** includes a single strength element **412** as is discussed with respect to **FIG. 3****.**

As illustrated in **FIG. 4****,** the overhead electrical cable **400** includes a third conductive layer **424** that includes conductive strands **430** (e.g., third conductive strands). The third conductive layer **424** surrounds the strength member **410** and surrounds the first conductive layer **420.** Characterized another way, the third conductive layer **424** is disposed between the first conductive layer **420** and the second conductive layer **422.** The third conductive layer **424** may advantageously increase the ampacity of the overhead electrical able, e.g., for purposes of high voltage transmission by providing additional conductor cross-section, e.g., as compared to the embodiment illustrated in **FIG. 3****.** The third conductive strands **430** may be fabricated from the same conductive material as the first conductor strands **426,** may be fabricated from the same conductive material as the second conductive strands **428,** or may be fabricated from a conductive material that has at least one material property that is different (e.g., has a different value than) than the same material property of the first conductive strands **426** and the second conductive strands **428.**

In a characterization, at least one material property of the conductive strands in one conductive layer are different than (e.g., have a different value than) the same material property of the conductive strands in another conductive layer. That is, the conductive (e.g., metallic) materials from which the respective conductive strands are formed may have a different chemical composition (e.g., may be a different alloy), and/or may have been processed in a manner that results in a different material property. For example, heat treatment (e.g., annealing) of some metallic materials may produce a conductive strand with different properties compared to a conductive strand of the same material (same chemical composition) that has not been heat treated. Similarly, work hardening of an alloy with the same chemical composition may result in different mechanical properties.

By way of example, the material property that is different among the conductive strands may be one or more of yield stress, elastic modulus, hardness, tensile strength and electrical conductivity. In one particular embodiment, not recited by claims, the at least one material property that is different among the conductive strands is the yield stress. The elastic modulus (i.e., Young's Modulus) is the tensile elasticity of the conductive strand, i.e., the ratio of tensile stress to tensile strain. As the material is subjected to a tensile stress, the material will begin to yield (plastically deform) at some tensile stress, and this point is called the yield stress. Different aluminum alloys and different tempers among similar alloys may have different yield stresses. In one particular characterization, the yield stress of an outer conductive layer (e.g., of the outer layer strands) is greater than the yield stress of an inner conductive layer (e.g., than the inner layer strands). That is, when a tensile stress is applied to the conductive layers, an inner conductive layer will plastically deform (yield) before plastic deformation of the outer conductive layer. For example, referring to **FIG. 1****,** the (outer) conductive strands **128** may have a higher yield stress than the (inner) conductive strands **126.** Similarly, in **FIGS. 2** and **3****,** the conductive strands **228/328** may have a higher yield stress than the conductive strands **226/326.** In the embodiment of **FIG. 4****,** the conductive strands **426** of the first conductive layer **420** may have a lower yield stress than the conductive strands **428** of the second conductive layer **422.** The intermediate third conductive layer **424** may include strands **430** of a material having a yield stress that is higher than or substantially the same as the strands **426** of the first conductive layer **420.** Further, the intermediate third conductive layer **424** may include strands **430** of a material having a yield stress that is the same as or less than the yield stress of the conductive strands **428** in the second conductive layer **422.**

In another characterization, not recited by claims, one material property that is different among certain conductive strands is tensile strength. In one particular characterization, an outmost conductive layer has a tensile strength that is greater than the tensile strength of an inner conductive layer. For example, referring to **FIG. 1****,** the (outer) conductive strands **128** may have a higher tensile strength than the (inner) conductive strands **126.** Similarly, in **FIGS. 2** and **3****,** the conductive strands **228/328** may have a tensile strength that is higher than or substantially the same as the conductive strands **226/326.** In the embodiment of **FIG. 4****,** the conductive strands **426** of the first conductive layer **420** may have a lower tensile strength than the conductive strands **428** of the second conductive layer **422.** The intermediate third conductive layer **424** may include strands **430** of a material having a tensile strength that is higher than the tensile strength of the strands **426** of the first conductive layer **420.** Further, the intermediate third conductive layer **424** may include strands **430** of a material having a tensile strength that is the same as or less than the tensile strength of the conductive strands **428** in the second conductive layer **422.** For the conductive strands having a higher tensile strength, aluminum alloys such as 6201-T81 and 6101 may be used, for example.

**Table I** illustrates the conductivity, tensile strength, yield stress and maximum (continuous) operating temperature for several aluminum materials.

**Table I - Aluminum Conducting Materials**

| **Description** | **Name** | **Conductivity (% IACS)** | **Tensile Strength (MPa)** | **Approximate Yield Stress (MPa)** | **Max. Operating Temp. (°C)** |
|---|---|---|---|---|---|
| Hard Drawn | 1350-H19 | 61 | 160 - 200 | 165 | 90 |
| MS Alloy | 5005-H19 | 53.3 | 250 | 190 | 90 |
| MS Alloy | 6101 | 53.5 | 295 | 200 | 90 |
| HS Alloy | 6201-T81 | 52.5 | 305 - 315 | 270 | 90 |
| MS Alloy | 6201-T83 | 57.5 | 250 | 200 | 90 |
| Fully Annealed | 1350-0 | 63 | 60 - 95 | 25 - 30 | 250 |
| Thermal Resistant | TAL (AT1) | 60 | 159 - 169 | 150 | 150 |
| HS Thermal Resistant | KTAL (AT2) | 55 | 225 - 248 | 200 | 150 |
| Ultra-Thermal Resistant | ZTAL/UTAL (AT3) | 60 | 159 - 176 | 150 | 210 |
| Extra Thermal Resistant | XTAL (AT4) | 58 | 159 - 169 | 150 | 230 |

According to the invention, one material property that is different among certain conductive strands is hardness. Hardness is a measure of localized resistance to plastic deformation, e.g., from mechanical indentation or abrasion. In one particular characterization, an outmost conductive layer has a hardness that is greater than the hardness of an inner conductive layer. For example, referring to **FIG. 1****,** not covered by claims, the (outer) conductive strands **128** may have a higher hardness than the (inner) conductive strands **126.** Similarly, in **FIGS. 2**and **3****,** according to the invention, the conductive strands **228/328** have a hardness that is higher than or substantially the same as the conductive strands **226/326.** In the embodiment of **FIG. 4****,** according to the invention, the conductive strands **426** of the first conductive layer **420** have a lower hardness than the conductive strands **428** of the second conductive layer **422.** The intermediate third conductive layer **424** may include strands **430** of a material having a hardness that is higher than the hardness of the strands **426** of the first conductive layer **420.** Further, the intermediate third conductive layer **424** may include strands **430** of a material having a hardness that is the same as or less than the hardness of the conductive strands **428** in the second conductive layer **422.** For the conductive strands having a higher hardness, hardened aluminum alloys such as an aluminum-zirconium (AlZr) alloy or a 1350-H19 aluminum alloy may be used.

In another characterization, not recited by claims, one material property that is different among certain conductive strands is electrical conductivity. In one particular characterization, an outmost conductive layer has an electrical conductivity that is greater than the electrical conductivity of an inner conductive layer. For example, referring to **FIG. 1****,** the (outer) conductive strands **128** may have a higher electrical conductivity than the (inner) conductive strands **126.** Similarly, in **FIGS. 2** and **3****,** the conductive strands **228/328** may have an electrical conductivity that is higher than or substantially the same as the conductive strands **226/326.** In the embodiment of **FIG. 4****,** the conductive strands **426** of the first conductive layer **420** may have a lower electrical conductivity than the conductive strands **428** of the second conductive layer **422.** The intermediate third conductive layer **424** may include strands **430** of a material having an electrical conductivity that is higher than the electrical conductivity of the strands **426** of the first conductive layer **420.** Further, the intermediate third conductive layer **424** may include strands **430** of a material having an electrical conductivity that is the same as or less than the electrical conductivity of the conductive strands **428** in the second conductive layer **422.** In any of the foregoing configurations, the conductive strands having a higher electrical conductivity may be fabricated from aluminum having a conductivity of at least about 60% IACS, such as at least about 62% IACS. In one particular characterization, the conductive strands having a higher electrical conductivity may be fabricated from an annealed aluminum alloy, such as a 1350-0 annealed aluminum alloy. In another characterization, the lower conductivity strands (e.g., conductive strands **326 in** **FIG. 3****)** may be fabricated from AlZr alloys, such the thermal resistant AlZr alloys listed in **Table I.**

As is discussed above with respect to the figures, the overhead electrical cable includes a strength member around which the conductive layers are wrapped. The strength member may include a plurality of strength elements (e.g., **FIGS. 1** and **2**), or may include a single strength element (e.g., **FIGS. 3** and **4**). The strength element(s) are comprised of fiber-reinforced composites. Such composites include reinforcing fibers that may be disposed in a binding matrix. The reinforcing fibers may be substantially continuous reinforcing fibers that extend along the length of the strength member, and/or may include short reinforcing fibers (e.g., fiber whiskers or chopped fibers) that are dispersed through the binding matrix. The fibers may be selected from a wide range of materials, including but not limited to, carbon, glass, boron, metal oxides, metal carbides, high-strength polymers such as aramid fibers or fluoropolymer fibers, basalt fibers and the like. The matrix material may include, for example, a plastic (e.g., polymer) such as a thermoplastic polymer or a thermoset polymer. The matrix may also be a metallic matrix, such as an aluminum matrix. One example of an aluminum matrix composite strength member is illustrated in U.S. Patent No. 6,245,425 by McCullough et al., which is incorporated herein by reference in its entirety.

One particular example of such a fiber-reinforced composite strength member is used in the ACCC^{®} overhead electrical cable that is manufactured by CTC Global Corporation of Irvine, CA, USA. Such an overhead electrical cable is illustrated, for example, in U.S. Pat. No. 7,368,162 by Hiel et al.. This strength member includes a high-strength carbon fiber inner core surrounded by a glass fiber layer to provide improved flexibility, and to provide resistance to galvanic corrosion of the aluminum conductor by shielding the carbon fibers from the aluminum. **FIGS. 3** and **4** illustrate the use of such a composite material as a single-element strength member. The use of a single-element strength member **(****FIGS. 3** and **4**) may enable the strength member to have a decreased diameter, e.g., as compared to a multi-element strength member **(****FIGS. 1** and **2**) for the same tensile properties, e.g., for the same tensile strength.

In one characterization, not recited by claims, the strength member has a diameter of at least about 3 mm, such as at least about 5 mm. Such a strength member can advantageously have a high tensile strength when fabricated using, e.g., high strength carbon fibers. For example, in a comparative example to the invention the strength member may have an ultimate tensile strength (UTS) of at least about 1700 MPa, such as at least about 1800 MPa, or at least about 1900 MPa. According to the invention, the strength member has a UTS of at least about 2000 MPa. In another characterization, not recited by claims, the strength member has a rated breaking strength of at least about 100 kN, such as at least about 125 kN, or even at least about 150 kN.

The configuration of the conductive (e.g., aluminum) strands disclosed herein may be particularly useful in regions that experience heavy ice loading. In this regard, to further reduce the effects of ice loading, the overhead electrical cable may utilize a strength member having a large diameter and/or a very high tensile strength. In one characterization, the strength member has a diameter of at least about 8 mm, such as at least about 9 mm, or even at least about 10 mm. As a practical matter, e.g., for storage and transportation, the diameter of the strength member will not be greater than about 30 mm, such as not greater than about 20 mm. In another characterization, not recited by claims, the strength member has an ultimate tensile strength (UTS) of at least about 2200 MPa, such as at least about 2300 MPa, such as at least about 2400 MPa, or even at least about 2500 MPa. Although not limited to any particular maximum UTS, the UTS will typically be not greater than about 3700 MPa. In another characterization, not recited by claims, the strength member has a rated breaking strength of at least about 150 kN, such as at least about 160 kN, at least about 170 kN, or even at least about 180 kN.

Overhead cables that use a fiber-reinforced composite strength member have a thermal knee-point. Initially, the tensile load of an installed cable is shared by the strength member and the conductive strands. As the cable's temperature rises with increased current, the coefficient of thermal expansion (CTE) of the conductive strands causes them to elongate faster than the lower CTE strength member. As temperature increases, the conductive strands relax and transfer their tensile load to the strength member. The apex of this transfer is referred to as the thermal knee-point. Because the CTE of the strength member is lower than the CTE of the conductive strands, conductor sag above the thermal knee-point decreases. The ACCC conductor's lower CTE and lower thermal knee-point may reduce thermal sag, i.e., sag due to thermal expansion of the cable.

A strength member having a very high tensile strength, such as in the ACCC^{®} configuration, enables the use of conductive strands of fully annealed aluminum. Fully annealed aluminum has a higher conductivity than non-annealed aluminum, and therefore can increase ampacity and reduce line losses. However, fully annealed aluminum lacks in some physical properties. For example, the use of fully annealed aluminum may result in increased line sag under static loads (e.g., ice loading) since only a relatively small tensile strain will plastically deform the aluminum, reducing tension in the conductor. According to the invention, the overhead electrical cable includes an inner conductive layer of an annealed aluminum and an outer conductive layer of a harder aluminum, such as an Al-Zr alloy. For example, referring to **FIG. 3****,** the strands **326** of the first conductive layer **320** may be formed from a fully-annealed aluminum, and the strands **328** of the second conductive layer **322** may be fabricated from a harder aluminum such as an Al-Zr alloy. The use of an inner layer of high conductivity aluminum and an outer layer of higher hardness aluminum may advantageously provide a high overall conductivity (high ampacity) while reducing mechanical sag, such as from ice loading. This is due to the larger strain range of the harder aluminum in which it elastically deforms. Alternatively, the electrical cable may include a high hardness layer on the inner conductive layer and the high conductivity annealed aluminum on the outer conductivity layer. However, placement of the harder aluminum on the outer layer may provide the additional benefits of higher abrasion resistance.

The present disclosure also relates to methods, not recited by claims, for the fabrication of an overhead electrical cable, e.g., for the fabrication of an overhead electrical cable as described in any of the embodiments above. In one example, a method for the manufacture of an overhead electrical cable is disclosed, comprising the steps of first wrapping a plurality of conductive strands of a first aluminum material onto a strength member to form a first conductive layer, and second wrapping a plurality of conductive strands of a second aluminum material onto the first conductive layer to form a second conductive layer. The second aluminum material has at least one material property having a property value that is different than the property value of the same material property of the first aluminum material.

The present disclosure also relates to methods, not recited by claims, for the installation of an electrical transmission line. In one example, the method includes the steps of stringing an overhead electrical cable between at least two support structures, applying tension to the overhead electrical cable, and while the overhead electrical cable is under
the applied tension, clipping first and second ends of the overhead electrical cable such that the overhead electrical cable is at least partially supported by the two support structures. The overhead electrical cable includes a strength member, a first conductive layer surrounding the strength member, the first conductive layer comprising conductive strands of a first aluminum material, and a second conductive layer surrounding the first conductive layer, the second conductive layer comprising conductive strands of a second aluminum material that is different than the first aluminum material. The second aluminum material has at least one material property that is different that the same material property of the first aluminum material.

The present disclosure also relates to an overhead electrical transmission line, not recited by claims, comprising an overhead electrical cable. The overhead electrical cable is strung under high tension onto at least two support towers. The overhead electrical cable includes a strength member, a first conductive layer surrounding the strength member, the first conductive layer comprising conductive strands of a first aluminum material, and a second conductive layer surrounding the first conductive layer, the second conductive layer comprising conductive strands of a second aluminum material that is different than the first aluminum material. The second aluminum material has at least one material property that is different that the same material property of the first aluminum material.

## Claims

1. An overhead electrical cable, comprising:
a strength member (210, 310, 410) comprising a fiber-reinforced composite strength element (212, 312, 412);
a first conductive layer (220, 320, 420) surrounding the strength member;
a second conductive layer (222, 322, 422) surrounding the first conductive layer;
**characterized in that** the strength member (210, 310, 410) has an ultimate tensile strength, UTS, of at least 2000 MPa; the first conductive layer (220, 320, 420) comprises strands of an annealed aluminum alloy; the second conductive layer (222, 322, 422) comprises strands of a hardened aluminum alloy;
wherein the hardened aluminum alloy has a hardness that is greater than a hardness of the annealed aluminum alloy, and
wherein both the strands of the annealed aluminum alloy and the hardened aluminum alloy are trapezoidal strands.

2. The overhead electrical cable recited in Claim 1, wherein the hardened aluminum alloy is selected from an aluminum-zirconium, AlZr, aluminum alloy and a 1350-H19 aluminum alloy.

3. The overhead electrical cable recited in any of the previous claims, further comprising a third conductive layer (424) disposed between the first conductive layer and the second conductive layer.

4. The overhead electrical cable recited in any of the previous claims, wherein the fiber-reinforced composite strength element comprises substantially continuous reinforcing fibers disposed in a binding matrix.

5. The overhead electrical cable recited in Claim 4, wherein the fiber-reinforced composite strength element comprises substantially continuous reinforcing carbon fibers disposed in a polymer binding matrix.

6. The overhead electrical cable recited in any previous Claim, wherein the strength member has a UTS of not greater than about 3700 MPa.

7. The overhead electrical cable recited in any previous claim, wherein the annealed aluminum alloy is a 1350-0 annealed aluminum alloy.

8. The overhead electrical cable recited in any of the previous claims, wherein the second conductive layer is an outermost conductive layer.

## Patentansprüche

1. Elektrisches Freileitungskabel, das Folgendes umfasst:
ein Festigkeitsglied (210, 310, 410), umfassend ein faserverstärktes Verbundfestigkeitselement (212, 312, 412);
eine erste leitfähige Schicht (220, 320, 420), die das Festigkeitsglied umgibt;
eine zweite leitfähige Schicht (222, 322, 422), die die erste leitfähige Schicht umgibt;
**dadurch gekennzeichnet, dass** das Festigkeitsglied (210, 310, 410) eine Grenzzugfestigkeit, UTS, von mindestens 2000 MPa aufweist; die erste leitfähige Schicht (220, 320, 420) Stränge aus einer geglühten Aluminiumlegierung umfasst; die zweite leitfähige Schicht (222, 322, 422) Stränge aus einer gehärteten Aluminiumlegierung umfasst; wobei die gehärtete Aluminiumlegierung eine Härte aufweist, die größer als eine Härte der geglühten Aluminiumlegierung ist, und
wobei sowohl die Stränge der geglühten Aluminiumlegierung als auch der gehärteten Aluminiumlegierung trapezförmige Stränge sind.

2. Elektrisches Freileitungskabel nach Anspruch 1, wobei die gehärtete Aluminiumlegierung aus einer Aluminium-Zirkonium-, AlZr-, Aluminiumlegierung und einer 1350-H19-Aluminiumlegierung ausgewählt ist.

3. Elektrisches Freileitungskabel nach einem der vorhergehenden Ansprüche, das ferner eine dritte leitfähige Schicht (424) umfasst, die zwischen der ersten leitfähigen Schicht und der zweiten leitfähigen Schicht angeordnet ist.

4. Elektrisches Freileitungskabel nach einem der vorhergehenden Ansprüche, wobei das faserverstärkte Verbundfestigkeitselement im Wesentlichen kontinuierliche Verstärkungsfasern umfasst, die in einer Bindungsmatrix angeordnet sind.

5. Elektrisches Freileitungskabel nach Anspruch 4, wobei das faserverstärkte Verbundfestigkeitselement im Wesentlichen kontinuierliche verstärkende Kohlenstofffasern umfasst, die in einer Polymerbindungsmatrix angeordnet sind.

6. Elektrisches Freileitungskabel nach einem vorhergehenden Anspruch, wobei das Festigkeitsglied eine UTS von nicht mehr als etwa 3700 MPa aufweist.

7. Elektrisches Freileitungskabel nach einem vorhergehenden Anspruch, wobei die geglühte Aluminiumlegierung eine geglühte 1350-O-Aluminiumlegierung ist.

8. Elektrisches Freileitungskabel nach einem der vorhergehenden Ansprüche, wobei die zweite leitfähige Schicht eine äußerste leitfähige Schicht ist.

## Revendications

1. Câble électrique aérien, comprenant :
un élément de renfort (210, 310, 410) comprenant un élément de renfort en composite renforcé de fibres (212, 312, 412) ;
une première couche conductrice (220, 320, 420) entourant l'élément de renfort ;
une deuxième couche conductrice (222, 322, 422) entourant la première couche conductrice ;
**caractérisé en ce que** l'élément de renfort (210, 310, 410) présente une résistance ultime à la traction, UTS, d'au moins 2000 MPa ; la première couche conductrice (220, 320, 420) comprend des brins d'un alliage d'aluminium recuit ; la deuxième couche conductrice (222, 322, 422) comprend des brins d'un alliage d'aluminium durci;
dans lequel l'alliage d'aluminium durci présente une dureté qui est supérieure à une dureté de l'alliage d'aluminium recuit, et
dans lequel les brins à la fois de l'alliage d'aluminium recuit et de l'alliage d'aluminium durci sont des brins trapézoïdaux.

2. Câble électrique aérien selon la revendication 1, dans lequel l'alliage d'aluminium durci est choisi parmi un alliage d'aluminium aluminium-zirconium, AlZr, et un alliage d'aluminium 1350-H19.

3. Câble électrique aérien selon l'une quelconque des revendications précédentes, comprenant en outre une troisième couche conductrice (424) disposée entre la première couche conductrice et la deuxième couche conductrice.

4. Câble électrique aérien selon l'une quelconque des revendications précédentes, dans lequel l'élément de renfort en composite renforcé de fibres comprend des fibres de renforcement sensiblement continues disposées dans une matrice liante.

5. Câble électrique aérien selon la revendication 4, dans lequel l'élément de renfort en composite renforcé de fibres comprend des fibres de renforcement en carbone sensiblement continues disposées dans une matrice liante en polymère.

6. Câble électrique aérien selon une quelconque revendication précédente, dans lequel l'élément de renfort présente une UTS ne dépassant pas 3700 MPa environ.

7. Câble électrique aérien selon une quelconque revendication précédente, dans lequel l'alliage d'aluminium recuit est un alliage d'aluminium recuit 1350-O.

8. Câble électrique aérien selon l'une quelconque des revendications précédentes, dans lequel la deuxième couche conductrice est une couche conductrice extérieure.
